# EUROPEAN PATENT APPLICATION

(11) **EP 4 790 407 A1**
(43) Date of publication of application: **12.08.2026**
(21) Application number: 26156570.9
(22) Date of filing: 05.02.2026
(51) Int. Cl.: G01N 30/60

(54) **SPRING LOADED FITTING FOR CONNECTING AND DISCONNECTING CAPILLARIES**

(30) Priority: 10.02.2025 US 202519049492
(71) Applicant: Agilent Technologies, Inc., Santa Clara, CA 95051-7201 (US)
(72) Inventor: VAN VENROOY, Manuel, 76337 Waldbronn (DE); MATZ, Patrick, 76337 Waldbronn (DE)
(74) Representative: Grünecker Patent- und Rechtsanwälte PartG mbB

(57) **Abstract**

In some examples, a capillary connection fitting may include a fitting housing that encloses a socket retainer and a spring. A spring compression limiter may include a specified length and is attached to the socket retainer to limit compression of the spring upon movement of the socket retainer to compress the spring.

## Description

### BACKGROUND

In fields such as high-performance liquid chromatography (HPLC), capillaries may be connected, for example, to instruments, valves, columns, each other, etc. Generally, a fitting may be utilized to connect a capillary to a port by screwing the fitting into the port, or otherwise connecting the fitting to the port. The fitting may include some type of integrated torque limiting or torque indicating features for proper installation.

### BRIEF DESCRIPTION OF DRAWINGS

Features of the present disclosure are illustrated by way of example and not limited in the following figure(s), in which like numerals indicate like elements, in which:

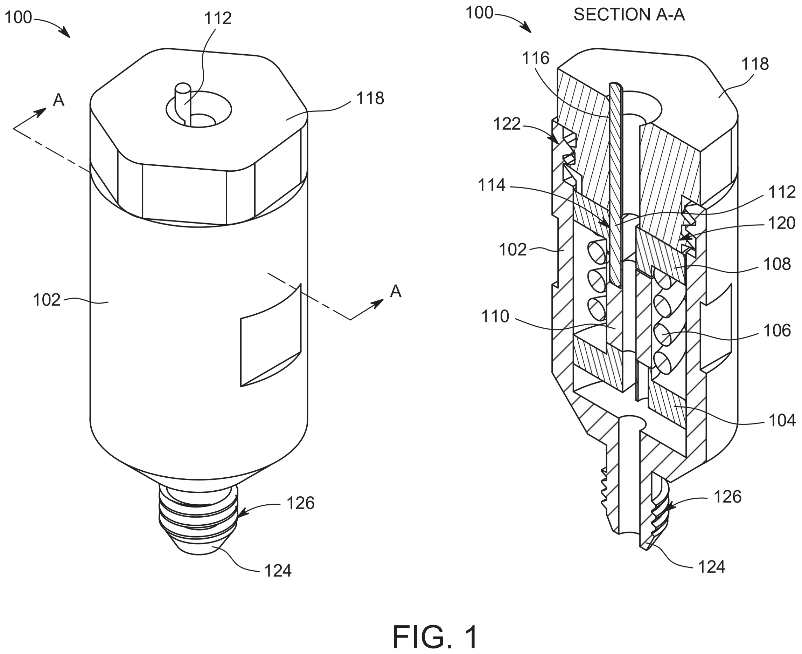

Figure 1 illustrates an isometric assembled view, and a cross-sectional view of a spring loaded fitting for connecting and disconnecting capillaries (hereinafter "capillary connection fitting"), in accordance with an example of the present disclosure;

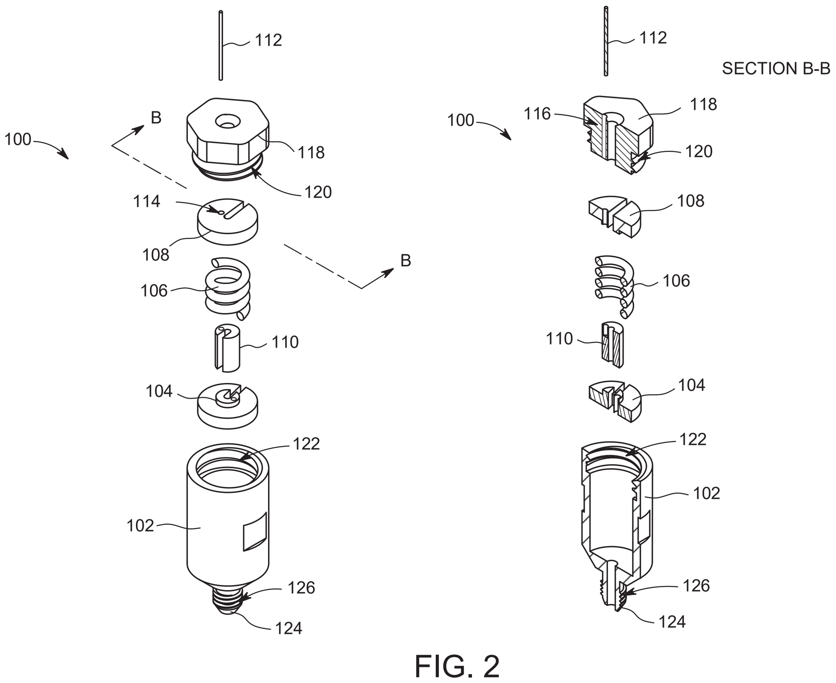

Figure 2 illustrates an isometric exploded view, and a cross-sectional view of the capillary connection fitting of Figure 1, in accordance with an example of the present disclosure;

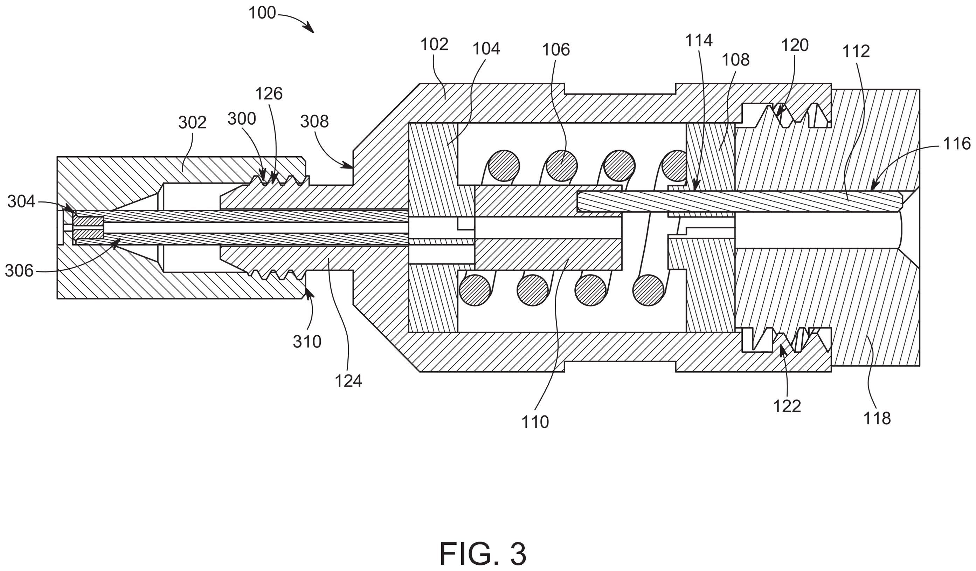

Figure 3 illustrates a cross-sectional view, similar to the cross-sectional view of Figure 1, of the capillary connection fitting of Figure 1, illustrating the capillary connection fitting screwed into a port just until a capillary tip touches a port ground of the port, in accordance with an example of the present disclosure;

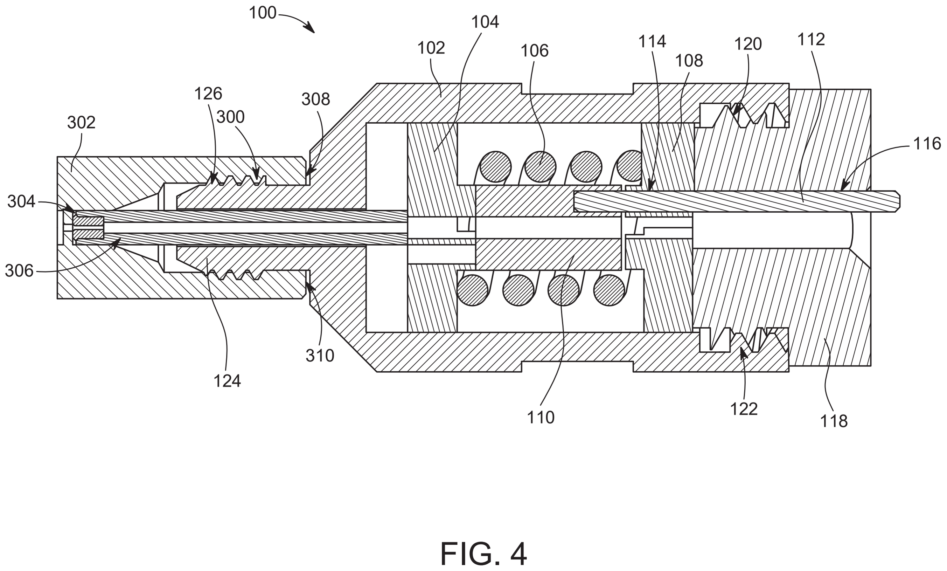

Figure 4 illustrates a cross-sectional view, similar to the cross-sectional view of Figure 1, of the capillary connection fitting of Figure 1, illustrating the capillary connection fitting in a fully installed configuration and a spring in a compressed configuration, where a compression of the spring is controlled by a stop constraint between the capillary connection fitting and a port, in accordance with an example of the present disclosure; and

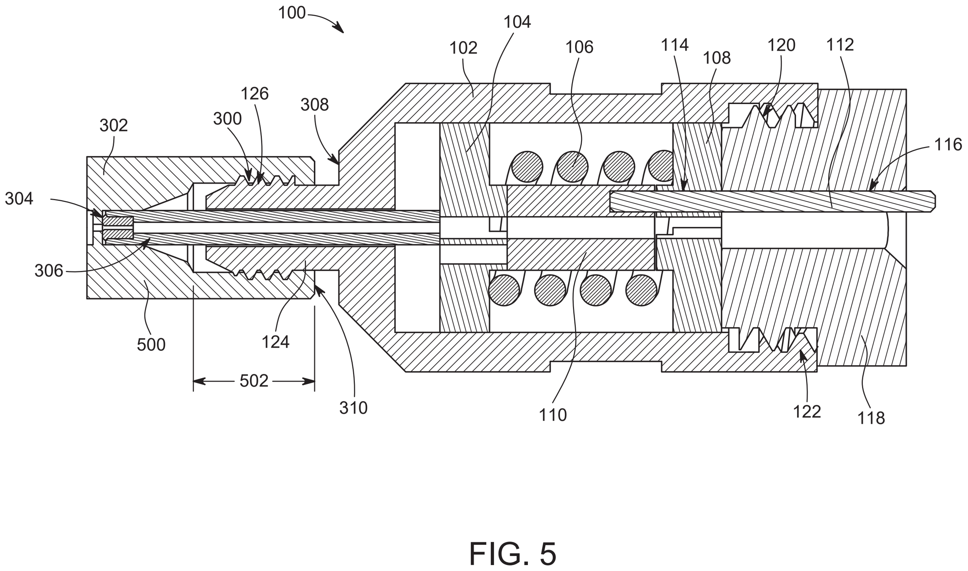

Figure 5 illustrates a cross-sectional view, similar to the cross-sectional view of Figure 1, of the capillary connection fitting of Figure 1, illustrating the port engagement protrusion of the capillary connection fitting fully installed in a port with a smaller port depth, in accordance with an example of the present disclosure.

### DETAILED DESCRIPTION

For simplicity and illustrative purposes, the present disclosure is described by referring mainly to examples. In the following description, numerous specific details are set forth in order to provide a thorough understanding of the present disclosure. It will be readily apparent however, that the present disclosure may be practiced without limitation to these specific details. In other instances, some methods and structures have not been described in detail so as not to unnecessarily obscure the present disclosure.

Throughout the present disclosure, the terms "a" and "an" are intended to denote at least one of a particular element. As used herein, the term "includes" means includes but not limited to, the term "including" means including but not limited to. The term "based on" means based at least in part on.

A spring loaded fitting for connecting and disconnecting capillaries (hereinafter "capillary connection fitting") is disclosed herein. For the capillary connection fitting disclosed herein, an integrated spring is utilized to apply a specified axial sealing force when the spring is compressed. The capillary connection fitting ensures correct capillary installation via a spring compression limiter (e.g., a cylinder with a specified length inside the spring) located inside the capillary connection fitting, and/or a housing end stop located on the capillary connection fitting (e.g., on a shaft collar which is larger than a thread outer diameter).

With respect to the capillary connection fitting disclosed herein, in fields such as high-performance liquid chromatography (HPLC), capillaries may be connected, for example, to instruments, valves, columns, each other, etc. Generally, a fitting may be utilized to connect a capillary to a port by screwing the fitting into the port. In this regard, a certain amount of torque (depending on a maximum pressure) is needed to apply a specified axial sealing force to install the fitting to the port. In some cases, tools may be needed to install the fitting to the port. The fitting may need to be installed properly (e.g., tight enough but also not too tight), and include some type of integrated torque limiting or torque indicating features (e.g., ratchet). In this regard, for fittings that include torque limiting or torque indicating features, it is technically challenging to implement such fittings in a size that is relatively small. Moreover, it is technically challenging to implement such fittings such that the torque applied to the fitting and/or the port is precisely controlled. For example, factors such as thread friction, tolerances, etc., may fluctuate, resulting in a predefined torque being insufficient to achieve the axial force required for sealing, while at other times the specified axial force may already be far exceeded by the time the torque is reached.

In order to address at least the aforementioned technical challenges, the capillary connection fitting disclosed herein provides an efficient and repeatable connection process. In this regard, the capillary connection fitting may be operated without tools. Components of the capillary connection fitting may be made from different materials (e.g., stainless steel, plastic, etc.), and from different production techniques (e.g., turning, milling, injection molding, 3D printing, etc.). A spring enables user-independent installation of the capillary connection fitting and ensures that the correct axial force required for sealing is always available.

Yet further, in some cases, a fitting may exhibit settling behavior (e.g., reduced thread pre-load) over time. For example, a screw that has been screwed in once may have some relaxation, which then also reduces the axial force with which the capillary is pressed into the port. The screw may need to be retightened from time to time.

The capillary connection fitting disclosed herein further addresses the aforementioned technical challenges in that the spring has a re-adjusting effect and provides the axial force needed for sealing over a longer period.

According to examples disclosed herein, a capillary connection fitting may include a fitting housing that encloses a socket retainer and a spring. A spring compression limiter may include a specified length and is attached to the socket retainer to limit compression of the spring upon movement of the socket retainer to compress the spring.

According to examples of the capillary connection fitting disclosed herein, the fitting housing may include a housing end stop engageable with a port end stop of a port to limit movement of the fitting housing relative to the port.

According to examples of the capillary connection fitting disclosed herein, the housing end stop may be formed as a shoulder on the fitting housing.

According to examples of the capillary connection fitting disclosed herein, the fitting housing may include a port engagement protrusion that is insertable in a port to cause movement of the socket retainer to compress the spring.

According to examples of the capillary connection fitting disclosed herein, the capillary connection fitting may further include a rod affixed to the spring compression limiter. The rod may be dimensioned to protrude through a cap that is removably affixed to the fitting housing when the spring reaches a maximum compression limited by the spring compression limiter.

According to examples of the capillary connection fitting disclosed herein, the rod functions as an indicator to indicate the maximum compression of the spring.

According to examples disclosed herein, a capillary connection fitting may include a fitting housing that encloses a spring. The fitting housing may include a housing end stop engageable with a port end stop of a port to limit movement of the fitting housing relative to the port.

According to examples disclosed herein, a capillary connection fitting may include a fitting housing that encloses a spring. The fitting housing may include a housing end stop engageable with a port end stop of a port to limit compression of the spring.

According to examples disclosed herein, the capillary connection fitting thus provides benefits such as tool-less operation, no overtightening, and independence from thread-friction.

Figure 1 illustrates an isometric assembled view, and a cross-sectional view of a spring loaded fitting for connecting and disconnecting capillaries (hereinafter "capillary connection fitting 100"), in accordance with an example of the present disclosure. Figure 2 illustrates an isometric exploded view, and a cross-sectional view of the capillary connection fitting 100, in accordance with an example of the present disclosure.

Referring to Figures 1 and 2, the capillary connection fitting 100 may include a fitting housing 102 that encloses a socket retainer 104, a spring 106, and a spring retention base 108. The socket retainer 104 may also be denoted a primary socket retainer, and the spring retention base 108 may also be denoted a secondary socket retainer. A spring compression limiter 110 may be disposed between the socket retainer 104 and the spring retention base 108 to limit compression of the spring 106 to a specified compression length, and thus to a specified compression force.

A rod 112 may be fixedly disposed in the spring compression limiter 110, and slidably disposed in an opening 114 of the spring retention base 108, and in an opening 116 of a cap 118. The rod 112 may serve as an indicator of correct installation of the capillary connection fitting 100. In this regard, once the spring 106 is properly compressed, the rod 112 may protrude through the cap 118 (e.g., as shown in Figures 1, 4, and 5) to indicate correct installation of the capillary connection fitting 100. The cap 118 may include external threads 120 that are engaged with internal threads 122 of the fitting housing 102 to retain the spring retention base 108 in place.

The fitting housing 102 may include a port engagement protrusion 124 formed as a threaded stem. The port engagement protrusion 124 may include external threads 126 that engage internal threads 300 of a port 302 (e.g., see Figures 1 and 3). The port 302 may include a port ground 304 engageable by a capillary 306, where Figure 3 shows a capillary tip of the capillary 306 engaged with the port ground 304.

The fitting housing 102 may include a housing end stop 308 (e.g., see Figure 3) engageable with a port end stop 310. The housing end stop 308 may engage with the port end stop 310 as shown in Figure 4 to limit movement of the fitting housing 102 relative to the port 302.

Figure 3 illustrates a cross-sectional view, similar to the cross-sectional view of Figure 1, of the capillary connection fitting 100, illustrating the capillary connection fitting 100 screwed into the port 302 just until a capillary tip (e.g., of the capillary 306) touches the port ground 304 of the port 302, in accordance with an example of the present disclosure.

Referring to Figures 1 and 3, and particularly Figure 3, with respect to the capillary connection fitting 100 being screwed into the port 302 just until a capillary tip touches the port ground 304 of the port 302, this contact of the capillary tip with the port ground 304 may set the initial location of the capillary tip prior to actuation of the spring 106 to apply a specified axial sealing force when the spring 106 is compressed.

Figure 4 illustrates a cross-sectional view, similar to the cross-sectional view of Figure 1, of the capillary connection fitting 100, illustrating the capillary connection fitting 100 in a fully installed configuration and the spring 106 in a compressed configuration, where a compression of the spring is controlled by a stop constraint between the capillary connection fitting 100 and the port 302, in accordance with an example of the present disclosure.

Referring to Figures 1, 3, and 4, and particularly Figure 4, once the capillary tip contacts the port ground 304 as described with reference to Figure 3, further rotation of the port engagement protrusion 124 (e.g., via rotation of the fitting housing 102) into the port 302 causes axial movement of the socket retainer 104 to begin to compress the spring 106. As the port engagement protrusion 124 is further rotated into the port 302, the housing end stop 308 engages the port end stop 310 to limit further axial and rotary movement of the fitting housing 102 relative to the port 302. This limitation of movement of the fitting housing 102 relative to the port 302 ensures that the capillary connection fitting 100 has been fully installed and the spring 106 is correctly compressed. Thus, the correct compression of the spring 106 is controlled via the hard stop constraint between the fitting housing 102 and the port 302 (e.g., engagement of the housing end stop 308 with the port end stop 310). Further, once the spring 106 is properly compressed, the rod 112 protrudes through the cap 118 to indicate correct installation of the capillary connection fitting 100. Generally, the spring 106 may be compressed in the range of 2 mm.

Figure 5 illustrates a cross-sectional view, similar to the cross-sectional view of Figure 1, of the capillary connection fitting 100, illustrating the port engagement protrusion 124 of the capillary connection fitting 100 fully installed in a port with a smaller port depth, in accordance with an example of the present disclosure.

Referring to Figures 1, 4, and 5, and particularly Figure 5, with respect to port 500 with a smaller port depth 502 compared to the port 302 of Figures 3 and 4 (e.g., general port depths may range between 9.5 mm-12.5 mm), instead of engagement of the housing end stop 308 with the port end stop 310 as in Figure 4, for the example of Figure 5, the spring compression limiter 110 controls compression of the spring 106. In this regard, the spring compression limiter 110 ensures proper compression of the spring 106, irrespective of the port depth of the port. Further, once the spring 106 is properly compressed, the rod 112 protrudes through the cap 118 to indicate correct installation of the capillary connection fitting 100. Protrusion of the rod 112 through the cap 118 is particularly relevant for the port 500 including the smaller port depth 502 as irrespective of the port depth of the port, the rod 112 serves as an indicator of correct installation of the capillary connection fitting 100.

Referring again to Figures 1-5 generally, in some examples, the spring retention base 108 may be eliminated or otherwise formed with the cap 118. In other examples, the spring compression limiter 110 may be formed with the socket retainer 104. In other examples, the cap 118 may be press fit into the fitting housing 102, or otherwise fixedly attached to the fitting housing 102.

What has been described and illustrated herein is an example along with some of its variations. The terms, descriptions and figures used herein are set forth by way of illustration only and are not meant as limitations. Many variations are possible within the spirit and scope of the subject matter, which is intended to be defined by the following claims -and their equivalents -in which all terms are meant in their broadest reasonable sense unless otherwise indicated.

The invention is further embodied by the following items:
1. A capillary connection fitting comprising:
   a fitting housing that encloses a socket retainer and a spring; and
   a spring compression limiter including a specified length and attached to the socket retainer to limit compression of the spring upon movement of the socket retainer to compress the spring.
2. The capillary connection fitting according to item 1, wherein the fitting housing comprises a housing end stop engageable with a port end stop of a port to limit movement of the fitting housing relative to the port.
3. The capillary connection fitting according to item 2, wherein the housing end stop is formed as a shoulder on the fitting housing.
4. The capillary connection fitting according to item 1, wherein the fitting housing comprises a port engagement protrusion that is insertable in a port to cause movement of the socket retainer to compress the spring.
5. The capillary connection fitting according to item 1, further comprising:
   a rod affixed to the spring compression limiter, wherein the rod is dimensioned to protrude through a cap that is removably affixed to the fitting housing when the spring reaches a maximum compression limited by the spring compression limiter.
6. The capillary connection fitting according to item 5, wherein the rod functions as an indicator to indicate the maximum compression of the spring.
7. A capillary connection fitting comprising:
   a fitting housing that encloses a spring, wherein the fitting housing includes a housing end stop engageable with a port end stop of a port to limit movement of the fitting housing relative to the port.
8. The capillary connection fitting according to item 7, further comprising:
   a spring compression limiter including a specified length and attached to a socket retainer to limit compression of the spring upon movement of the socket retainer to compress the spring.
9. The capillary connection fitting according to item 8, further comprising:
   a rod affixed to the spring compression limiter, wherein the rod is dimensioned to protrude through a cap that is removably affixed to the fitting housing when the spring reaches a maximum compression limited by the spring compression limiter.
10. The capillary connection fitting according to item 9, wherein the rod functions as an indicator to indicate the maximum compression of the spring.
11. The capillary connection fitting according to item 7, wherein the housing end stop is formed as a shoulder on the fitting housing.
12. The capillary connection fitting according to item 7, wherein the fitting housing comprises a port engagement protrusion that is insertable in the port to cause movement of a socket retainer to compress the spring.
13. A capillary connection fitting comprising:
   a fitting housing that encloses a spring, wherein the fitting housing includes a housing end stop engageable with a port end stop of a port to limit compression of the spring.
14. The capillary connection fitting according to item 13, further comprising:
   a spring compression limiter including a specified length and attached to a socket retainer to limit the compression of the spring upon movement of the socket retainer to compress the spring.
15. The capillary connection fitting according to item 14, further comprising:
   a rod affixed to the spring compression limiter, wherein the rod is dimensioned to protrude through a cap that is removably affixed to the fitting housing when the spring reaches a maximum compression limited by the spring compression limiter.
16. The capillary connection fitting according to item 15, wherein the rod functions as an indicator to indicate the maximum compression of the spring.
17. The capillary connection fitting according to item 13, wherein the housing end stop is formed as a shoulder on the fitting housing.
18. The capillary connection fitting according to item 13, wherein the fitting housing comprises a port engagement protrusion that is insertable in the port to cause movement of a socket retainer to compress the spring.

## Claims

1. A capillary connection fitting comprising:
a fitting housing that encloses a socket retainer and a spring; and
a spring compression limiter including a specified length and attached to the socket retainer to limit compression of the spring upon movement of the socket retainer to compress the spring.

2. The capillary connection fitting according to claim 1, wherein the fitting housing comprises a housing end stop engageable with a port end stop of a port to limit movement of the fitting housing relative to the port.

3. The capillary connection fitting according to claim 2, wherein the housing end stop is formed as a shoulder on the fitting housing.

4. The capillary connection fitting according to claim 1, wherein the fitting housing comprises a port engagement protrusion that is insertable in a port to cause movement of the socket retainer to compress the spring.

5. The capillary connection fitting according to claim 1, further comprising:
a rod affixed to the spring compression limiter, wherein the rod is dimensioned to protrude through a cap that is removably affixed to the fitting housing when the spring reaches a maximum compression limited by the spring compression limiter.

6. The capillary connection fitting according to claim 5, wherein the rod functions as an indicator to indicate the maximum compression of the spring.

7. A capillary connection fitting comprising:
a fitting housing that encloses a spring, wherein the fitting housing includes a housing end stop engageable with a port end stop of a port to limit movement of the fitting housing relative to the port.

8. The capillary connection fitting according to claim 7, further comprising:
a spring compression limiter including a specified length and attached to a socket retainer to limit compression of the spring upon movement of the socket retainer to compress the spring.

9. The capillary connection fitting according to claim 8, further comprising:
a rod affixed to the spring compression limiter, wherein the rod is dimensioned to protrude through a cap that is removably affixed to the fitting housing when the spring reaches a maximum compression limited by the spring compression limiter, wherein optionally the rod functions as an indicator to indicate the maximum compression of the spring.

10. The capillary connection fitting according to claim 7,
(i) wherein the housing end stop is formed as a shoulder on the fitting housing; or
(ii) wherein the fitting housing comprises a port engagement protrusion that is insertable in the port to cause movement of a socket retainer to compress the spring.

11. A capillary connection fitting comprising:
a fitting housing that encloses a spring, wherein the fitting housing includes a housing end stop engageable with a port end stop of a port to limit compression of the spring.

12. The capillary connection fitting according to claim 11, further comprising:
a spring compression limiter including a specified length and attached to a socket retainer to limit the compression of the spring upon movement of the socket retainer to compress the spring.

13. The capillary connection fitting according to claim 12, further comprising:
a rod affixed to the spring compression limiter, wherein the rod is dimensioned to protrude through a cap that is removably affixed to the fitting housing when the spring reaches a maximum compression limited by the spring compression limiter.

14. The capillary connection fitting according to claim 13, wherein the rod functions as an indicator to indicate the maximum compression of the spring.

15. The capillary connection fitting according to claim 11,
(i) wherein the housing end stop is formed as a shoulder on the fitting housing; or
(ii) wherein the fitting housing comprises a port engagement protrusion that is insertable in the port to cause movement of a socket retainer to compress the spring.
